(19) Europäisches Patentamt
European Patent Office
Office européen des brevets

(11) **EP 1 016 313 B1**

(12) **EUROPEAN PATENT SPECIFICATION**

(45) Date of publication and mention
of the grant of the patent:
**25.02.2004 Bulletin 2004/09**

(21) Application number: **98955402.7**

(22) Date of filing: **17.09.1998**

(51) Int Cl.⁷: $H04Q\ 11/04$, $H04Q\ 11/08$

(86) International application number:
**PCT/EP1998/005921**

(87) International publication number:
**WO 1999/014977 (25.03.1999 Gazette 1999/12)**

(54) **CROSS-CONNECT SWITCH FOR TIME DIVISION MULTIPLEXING SYSTEMS**

RANGIERVERTEILER FÜR ZEITMULTIPLEXSYSTEME

COMMUTATEUR REPARTITEUR DESTINE A UN MULTIPLEXAGE TEMPOREL

(84) Designated Contracting States:
**BE FR GB IT SE**

(30) Priority: **18.09.1997 DE 19741042**

(43) Date of publication of application:
**05.07.2000 Bulletin 2000/27**

(73) Proprietor: **Nokia Corporation**
**02150 Espoo (FI)**

(72) Inventors:
• **MUSIOL, Torsten**
**D-40880 Ratingen (DE)**
• **ILCHMANN, Stephan**
**D-42279 Wuppertal (DE)**

(74) Representative: **COHAUSZ & FLORACK**
**Patent- und Rechtsanwälte**
**Bleichstrasse 14**
**40211 Düsseldorf (DE)**

(56) References cited:
| | |
|---|---|
| **DE-A- 2 061 118** | **US-A- 3 832 492** |
| **US-A- 3 927 267** | **US-A- 4 186 276** |
| **US-A- 4 713 804** | |

**Description**

Technical Field

The invention relates to a cross-connect switch for the switching of time division multiplex data streams between different system levels with transmission speeds that differ from one another. In this connection, among other things, the pulse frame structure is modified in the data exchange between the system levels.

Background of the Invention

As is known, digital communication networks predominantly contain time division multiplexing connections. Each transmission path is divided into time slots in accordance with a periodically repeating frame structure. For example, a code word of a channel is respectively transmitted during each time slot. Consequently, each transmission path supplies a number of channels for the serial transmission of different data streams, which contain, for example, binary coded telephone signals that are converted by way of PCM devices.

The current patent application relates to a cross-connect switch similar to the time division switching system of the "Time-Space-Time" Type known from the document US 3,927,267 A.

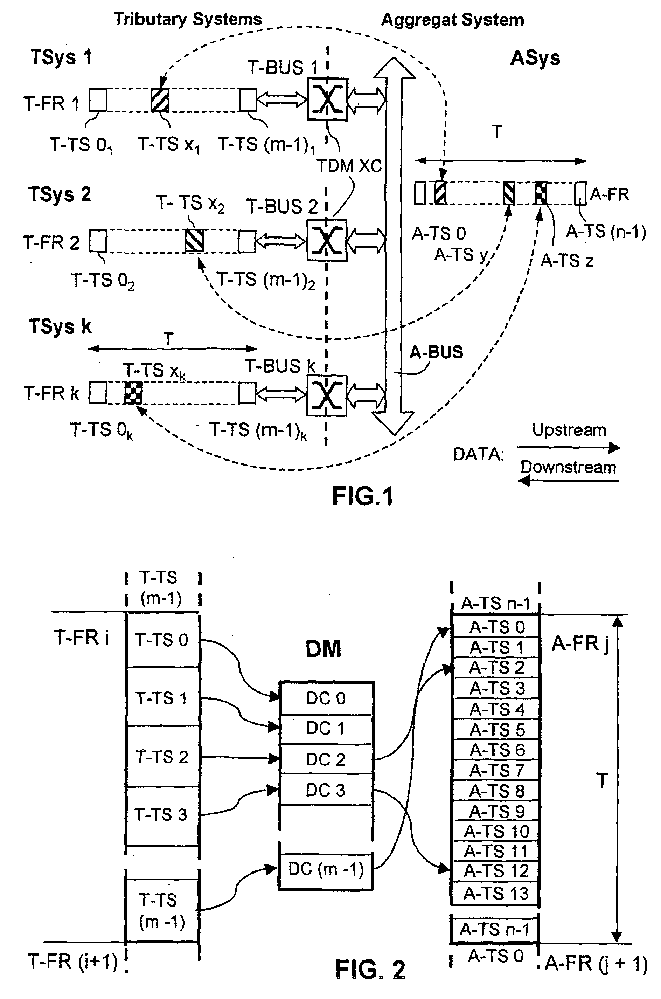

FIG. 1 shows the functional principle of such a switch. The communication network represented contains a number of discrete tributary systems TSys 1 to TSys k, each with at least one interface T-BUS, which can, for example, be a data bus and transports information respectively from maximally m channels with a transmission speed or bit rate $C_T$. In order to be able to exchange data between different channels, a data bus A-BUS of an aggregate system ASys connects the interfaces

T-BUS 1 to T-BUS k. This data bus collects and distributes all of the data streams flowing in the tributary systems. In addition, each channel can fundamentally be used in both directions. The aggregate system ASys has a higher bit rate $C_A$ than the tributary systems.

With the same frame duration T in all systems, a higher number of time slots is thus available in the aggregate system ASys.

For the present invention, it is significant that due to the inequality of the pulse frames F-FR and A-FR, each connection between a tributary system TSys and the aggregate system ASys requires a signal conversion in both directions. In this connection, the contents of the time slots of both systems change their time slot within the pulse frame. This task is respectively undertaken by a TDM cross-connect switch TDM XC. As FIG. 1 shows, this cross-connect switch transmits data words that supply the tributary systems respectively during a time slot T-TS $x_1$, T-TS $x_2$, or T-TS $x_k$ for each new time slot A-TS x, A-TS y, or A-TS z of the aggregate system and vice versa.

For better comprehension of the following explanations, problems of synchronization should not be considered. From this, it is assumed that the systems in both hierarchy levels are fully synchronized with regard to the pulse frames and the time slots.

FIG. 2 shows the data flow from a tributary system TSys to the aggregate system ASys. Both systems function with pulse frames that have the same frame duration T. The pulse frame T-FR of the tributary system TSys is divided into m time slots T-TS 0 to T-TS (m-1) of the same length. Within each pulse frame T-FR, a data word can be transmitted by all m channels. The pulse frames A-FR of the aggregate system ASys contain n shorter time slots A-TS 0 to A-TS (n-1), in order to transmit data words from maximally n channels. In this connection, the equation m << n applies.

As FIG. 2 shows, a data memory DM for the signal conversion loads the data words of the tributary system time slots T-TS 0 to T-TS {m-1) into separate data cells DC 0 to DC (m-1). This advantageously occurs in the chronological order of occurrences in the tributary system. The data memory DM has capacity for a complete tributary system frame T-FR. The data cells can be directly addressed and have storage elements at least for all of the characters of a data word. In order to place the stored data words into the necessary time slots A-TS 0 to A-TS (n-1) of the aggregate frame, the data cells are read upon appearance of the corresponding aggregate time slot and the data words are thus transmitted into the aggregate system in a changed order.

In the example according to FIG. 2, therefore, first the content of the data cell DC (m-1) is transmitted into the time slot A-TS 0, then the data from the cell DC 2 is transmitted into the time slot A-TS 2 and so forth. The unused time slots A-TS are available for the receipt of data words of other tributary systems.

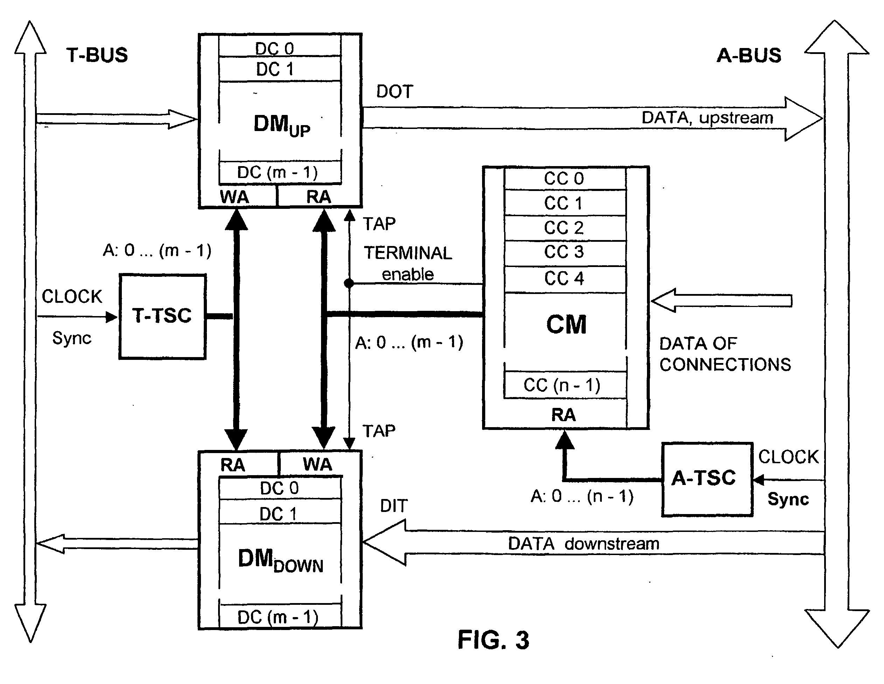

In principle, two embodiments have been disclosed for operating the memory in a cross-connect switch. The first is shown in FIG. 3. This is based on the embodiment according to FIG. 2. Since the data streams flow in both directions, the data memory DM for signal conversion requires two storage blocks between the aggregate side data bus A-BUS and the data bus T-BUS of each tributary system; a storage block $DM_{UP}$ for the data stream flowing to the aggregate system and a storage block $DM_{DOWN}$ for the data stream coming from the aggregate system ASys. Both storage blocks are dimensioned for the data words of at least one complete tributary system frame, but are in no way dimensioned for the n data words of an aggregate frame. Furthermore, each storage block includes both a write address terminal WA and a read address terminal RA in order to realize the loading and reading of the data cells DC in different orders, simultaneously and independently of each other. It is useful to write the data words into the data cells DC 0 to DC (m-1), as already shown in FIG. 2, in a numerically continuous fashion, i.e. in the order corresponding to the time slot in the tributary system TSys. For the addressing of the storage blocks $DM_{UP}$ and $DM_{DOWN}$, a time slot counter T-TSC is used in a simple manner both in the writing by a tributary system TSys and in the reading of the data words coming from the aggregate system. This time slot counter T-TSC operates synchronously to the tributary system frame T-FR and respectively sets the write address terminal WA of the storage block $DM_{UP}$ and the read address terminal RA of the storage block $DM_{DOWN}$ to the address that corresponds to the current time slot number in the tributary system.

On the aggregate side, i.e. between the storage blocks and the aggregate system, the data exchange occurs in a numerically discontinuous fashion, i.e. the blocks are addressed with a connection sequence which adapts the time slot of the data words to the corresponding pulse frame at the transition to the other system. The connection sequence is stored in a control memory CM, which contains at least one control cell CC y for each aggregate time slot A-TS y. A corresponding control cell CC is definitely allocated to each of the n time slots A-TS.

If a data exchange with the data cells DC x of the storage blocks is required for an aggregate time slot A-TS y, then a control computer, which controls the communication flow in the network, enters a control sign, a so-called flag, in the corresponding control cell CC y and this flag activates the required connecting part on the aggregate side.

In addition, for the definition of the tributary system-side connecting part, a common address for the read address terminal RA in the storage block $DM_{UP}$ and for the write address terminal WA in the storage block $DM_{DOWN}$ is entered into the control cell CC y. As a result, the control memory CM is occupied according to the time sequence of the aggregate time slot A-TS.

The control memory CM also contains a read address terminal RA that addresses a time slot counter A-TSC, which runs synchronously to the aggregate frame A-FR, according to the number of the current aggregate time slot.

If, for example, the time slot T-TS 3 were to be connected by the tributary system to the time slot A-TS 218, then the control cell CC 218 of the control memory CM, no longer shown in FIG. 3, contains the address A = 3, because upstream, the content of time slot T-TS 3 is temporarily stored in the data cell DC 3 of storage block $DM_{UP}$ and downstream, the content of time slot A-TS 218 is temporarily stored in data cell DC 3 of storage block $DM_{DOWN}$.

Upon appearance of the time slot A-TS 218 in the aggregate frame, the time slot counter A-TSC sets the read address terminal RA of the control memory CM to the control cell CC 218. Its content, the address A = 3 on the one hand causes a reading of the data word stored in the storage block $DM_{UP}$, and this data word consequently travels by way of the data bus A-BUS into the time slot A-TS 218. On the other hand, data cell DC 3 in storage block $DM_{DOWN}$ takes the data word contained in the time slot A-TS 218 in order to send it into the tributary system during the subsequent time slot T-TS 3.

The aggregate-side data output and data input terminal DOT and DIT of the storage blocks $DM_{UP}$ and $DM_{DOWN}$ are respectively permitted to be connected to the data bus A-BUS only during the aggregate time slots A-TS that are required for the desired data exchange. Except for these times, the connections must be separated to prevent feedback to the data flow to or from other tributary systems. This is realized by terminal activation ports TAP, which only permit data exchange if the control sign is contained in the current control cell. The terminal activations are represented as control lines for the embodiments below. These control lines actuate data release circuits, which are disposed at the aggregate-side data outputs or data inputs. The control memory CM can maximally contain m entries because in the extreme case, all the time slots T-TS of a tributary system should be connected to the aggregate system. At least n control cells CC are required so that each tributary system time slot T-TS can also be connected to each of the n aggregate time slots A-TS.

In the first embodiment, therefore, the storage blocks $DM_{UP}$, $DM_{DOWN}$ in the chronological sequence of the time slots T-TS in the tributary system are occupied with data words and the control memory CM in the sequence of time slots (A-TS) in the aggregate system are occupied with addresses.

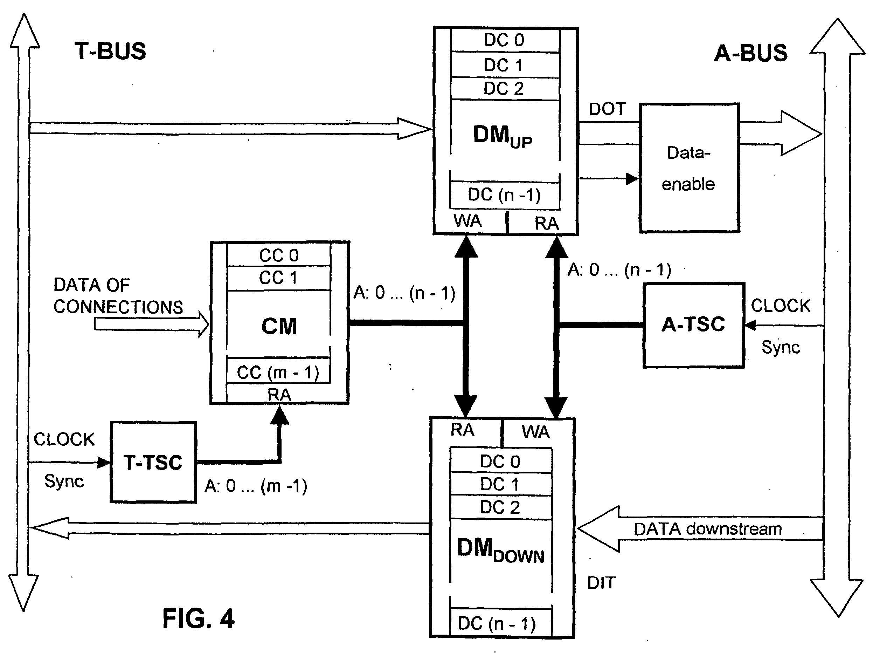

FIG. 4 shows the second known embodiment. Fundamentally, there are the same subassemblies as in FIG. 3. The storage blocks $DM_{UP}$ and $DM_{DOWN}$, however, have a capacity for the n data words from one or several complete aggregate frames A-FR. In the storage blocks, each data cell DC is continuously assigned to a aggregate time slot A-TS y so that in contrast to the first embodiment, the data memory DM is occupied according to the chronological sequence in the aggregate system. The time slot counter A-TSC, which runs synchronously to the aggregate frame, directly controls the aggregate-side data exchange, in contrast to which the data exchange on the tributary system side occurs discontinuously with an address sequence stored in the control memory CM.

For each tributary system time slot T-TS, the control memory CM requires only one control cell CC x into which an address A = x of a data cell DC x is written when data exchange with the tributary system is intended to be executed during the time slot T-TS x.

Since in the known embodiments, each entry into the control memory CM produces a connection between the systems, the establishment of a new connection is realized by means of an additional entry and the division is realized by deleting the corresponding entry.

The embodiments shown differ in the total demand for storage capacity for data memory DM and control memory CM. For the first, a relatively small data memory DM with (2 m) data cells is required. In contrast, the second embodiment requires a total of (2 n) data cells.

Each cross-connect switch, however, can at most connect its maximal number of channels in the tributary system, i.e. m channels, to the aggregate system. Therefore, in the second embodiment, only a small number of data cells DC is ever simultaneously involved in the data exchange so that there is a considerable redundancy in the storage blocks $DM_{UP}$ and $DM_{DOWN}$.

Somewhat more favorable is the redundancy in the control memory CM, which requires only one separate control cell per connection in each embodiment. Since the control memory CM must maximally contain m different data cell addresses, when m is small, the control cells can have fewer storage elements than the data cells.

The control memory of the first embodiment requires a capacity:

$$C_{CM\,1} = n(\log_2 m + 1) \text{ bit and the second } C_{CM\,2} = m(\log_2 n) \text{ bit.}$$

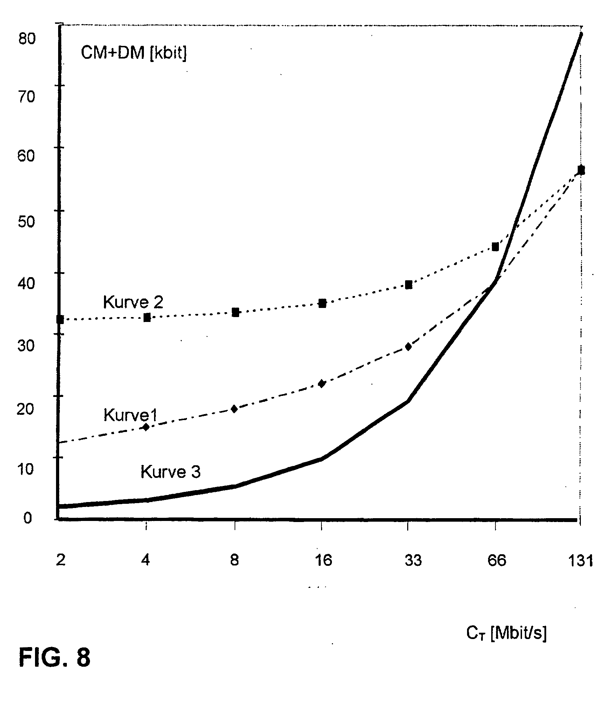

As shown in FIG. 8, the total demand for storage capacity for the second embodiment can easily be more than triple.

Nevertheless, the first embodiment also has a considerable number of control cells CC, which never contain entries simultaneously, even with occurrences of high traffic. For the control memory CM, n control cells CC are required, although of them, only a maximal number of m control cells per aggregate frame can be occupied with addresses of data cells.

Since cross-connect switches are used in large numbers in digital communication networks, it is desirable to embody them so that the storage redundancy described is further reduced.

Summary of the Invention

It is therefore the object of the invention, in a cross-connect switch, to further reduce the required total number of necessary storage elements for the storage blocks and the control memory, i.e. to further reduce the total capacity in relation to the known embodiments.

The object is attained with the means demonstrated in claim 1. The remaining claims describe embodiment details. The embodiment makes use of the fact that in time division multiplexing, the content of the time slots are exchanged between the tributary systems and the aggregate system in a chronological connection sequence, i.e. serially.

The invention is based on the first known embodiment with at least two storage blocks. As has already been demonstrated, both of these blocks on the tributary system side are loaded or read in a numerically continuous fashion and, due to the definite numerical assignment of data cells to the tributary system time slots, only require data cells for the relatively small number of data words of at least one tributary system frame. As is known from FIG. 3, the storage blocks on the tributary system side are likewise addressed by a counter, which counts the time slots of the tributary system frame.

In contrast to the known first embodiment, though, the control cells of the control memory are also each definitely assigned to a tributary system time slot independent of the call intent of the subscribers. Both the data cell in each storage block and the control cell are accessed by means of a single cell address per time slot.

A control computer writes the connections between the time slots of both systems as a list in the control memory in accordance with the subscriber intent. Each connection is entered into the control cell for the corresponding tributary system time slot. The number of entries consequently depends directly on the number of connections per aggregate frame and cannot exceed the value m, as is also true in the known embodiments. Due to the definite numerical assignment of the control cells to the tributary system time slots, only control cells corresponding to the number m of the tributary system time slots are required. Therefore, (n-m) control cells are saved, which is notable particularly in the case in which m << n.

The access to the control cells in the time sequence of the aggregate time slots is realized in the following manner:

According to the invention, each entry is comprised of a data set with at least two data fields. A first data field indicates the number of the aggregate time slot which, for the purpose of data exchange, is to be connected according to the connection list to the data cell in each control cell, which data cell is defined by means of the entry. A second data field indicates the address of the control cell and consequently also the address of the data cell, which, after the executed data exchange of the aggregate time slot defined by the data set with the data memory is required as the next according the connection sequence.

According to the invention, each data set, with its address at which it is entered in the control memory, defines the time slot in the tributary system for the corresponding connection, and with the value of the first data field, determines the aggregate time slot, while the value of the second data field indicates the address for the next connection in the connection sequence.

Each data set can be directly accessed by way of a read address terminal, by means of which the number of the aggregate time slot contained in the data set is standing by at a data output and the address contained in the data set is standing by at an address output.

The control computer supplies an initial address for the realization of the first connection of a connection sequence. This initial address is temporarily stored in a buffer memory and addresses the aggregate-side write and read address terminals in the storage blocks respectively at the data cell that is required for the tributary system-side part of the connection. Furthermore, the address permits the access to the control cell which contains the data set for a first desired connection. The number of the aggregate time slot for the first connection is supplied at the data output and the address for the data set of the next connection is supplied at the address output. A comparator compares the time slot number from the data output to the counter state of a time slot counter that runs synchronously to the aggregate frame. If the number disposed in the data set and the number of the current aggregate time slot coincide, then the comparator generates a control pulse. By way of a terminal activation, this brings about the data exchange for the adjusted first connection by means of releasing the aggregate-side data inputs and outputs in the storage blocks. On the other hand, in the buffer memory, the initial address is replaced by that from the data output of the control memory. As a result, the same cycle automatically repeats for the subsequent connections, in accordance with the connection sequence.

Brief Description of the Drawing

The invention should be explained below in conjunction with an exemplary embodiment. In particular, the accompanying drawings show the following:

FIG. 1 shows a communication network with cross-connect switches for connecting tributary systems to an aggregate system,

FIG. 2 shows the data flow from a tributary system to an aggregate system,

FIG. 3 shows a first known embodiment of a cross-connect switch,

FIG. 4 shows a second known embodiment of a cross-connect switch,

FIG. 5 shows an embodiment for a cross-connect switch according to the invention,

FIG. 6 shows the function of the embodiment according to FIG.5, with the realization of a connection list according to Table 1,

FIG. 7 shows the function of the embodiment according to FIG. 5, with the realization of a connection list in which a connection has been terminated,

FIG. 8 shows a comparison of the total demand for storage capacity for the data memory and the control memory in relation to the known solutions.

Detailed Description of the Preferred Embodiments

The communication network shown in FIG. 1 represents a known principle embodiment for the coupling of tributary systems TSys to an aggregate system ASys by means of cross-connect switches TDM XC. The data flow in a communication network of this kind is represented in FIG. 2 in the example of the upward direction. Parallel to this, each cross-connect switch produces a data flow in the downward direction, according to the same principle. The FIGS. 1 and 2 are extensively described in the introduction to the description.

FIGS. 3 and 4 show the known embodiments that are discussed in the introduction to the description and are for arranging and controlling the memory in a cross-connect switch TDM XC. In addition to this, by way of example for the comparison, the curves 1 and 2 in FIG. 8 indicate the total demand for storage capacity for the data memory DM and the control memory CM as a function of the data rate $C_T = 2.048$ Mbit/s of the tributary system, with reference to an aggregate system with a data rate of $C_A = 63 \cdot 2.048$ Mbit/s.

The curve 1 indicates the storage demand of the first embodiment and curve 2 indicates the storage demand of the second embodiment. Both curves clearly indicate that cross-connect switches according to the first embodiment reduce the total memory demand to approximately one third in relation to the second embodiment.

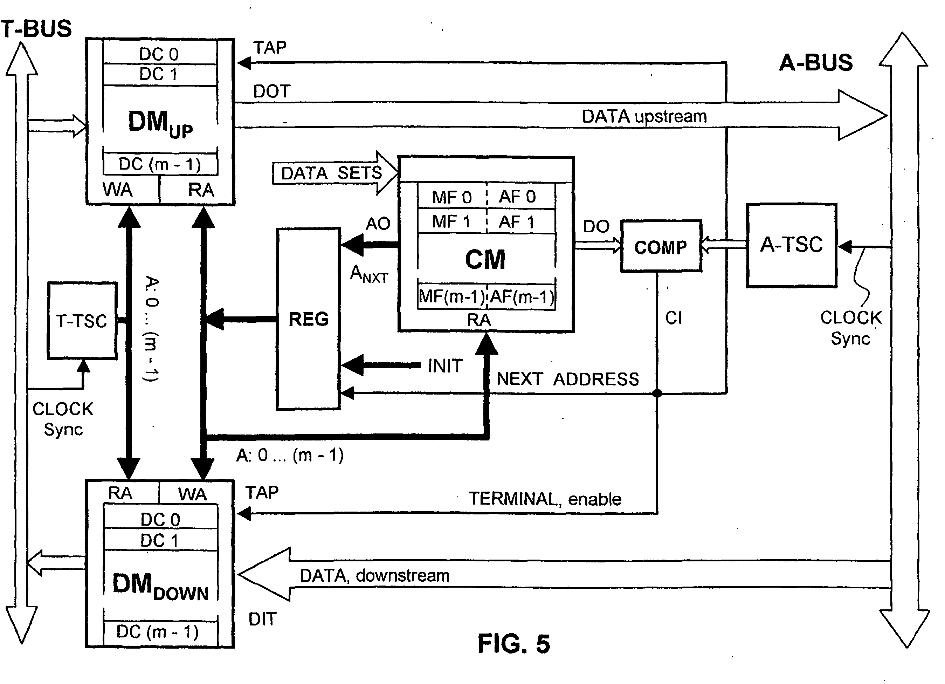

FIG. 5 shows an advantageous embodiment of a cross-connect switch TDM XC according to the invention. Just like the cross-connect switch disclosed by FIG. 3, this one also contains a data memory with a storage block $DM_{UP}$ for the data stream coming from the tributary system and a storage block $DM_{DOWN}$ for the data stream flowing to the tributary system, which can be simultaneously loaded and read independently of each other respectively by way of read address terminals RA and write address terminals WA. At least on the aggregate side, the data output terminal DOT of the storage block $DM_{UP}$ and the data input terminal DIT of the storage block $DM_{DOWN}$ contain data release inputs which are passably connected in accordance with the connection list by way of terminal activation ports TAP only during the data exchange.

The data cells in each storage block $DM_{UP}$, $DM_{DOWN}$ are definitely assigned to the tributary system time slots T-TS 0 to T-TS (m-1) and on the tributary system side, are loaded or read in a numerically continuous fashion. The addressing is undertaken by the counter T-TSC, which counts the time slots T-TS of the tributary system frame T-FR.

In order to transmit, for example, the PCM scan values of telephone connections, as the current example indicates, only one single data cell DC x is required for each time slot T-TS of a tributary system frame. If a connection is produced, this single data cell DC x is both loaded and read within one pulse frame duration T i. Depending on the time slots of the time slots T-TS x and A-TS y in relation to each other, either data words are exchanged with the tributary system first and then with the aggregate system, or vice versa. In the first instance, the upward data flow of a channel during the same pulse frame duration T j is transmitted from the tributary system into the aggregate system and the downward data flow is accepted into the tributary system one pulse frame duration later T(j+1). In the other instance, this occurs in the reverse order. In both cases, there is a time lag of one pulse frame duration T between the opposingly directed data flows of a connection. This has no influence, though, on the transmission quality. However, the invention can also be embodied with more than two storage blocks. Then in each direction, at least two storage blocks are used in the change to writing and reading.

The cross-connect switch described thus far corresponds to the known first embodiment.

With the switch according to the invention, however, the control cells of the control memory CM are also each definitely assigned with a tributary system time slot T-TS x, independent of the call intent. A single address A = x, which corresponds to the number of the tributary system time slot T-TS x, permits the access both to the control cell CC x and to the data cell DC x corresponding to each time slot T-TS x.

Since an access to the control cells in the chronological sequence of the aggregate time slots A-TS is required, it is neither possible for this access to control the time slot counter T-TSC of the tributary system nor is a direct control by way of an aggregate time slot counter A-TSC possible due to the unequal number of time slots A-TS and addresses in the control memory.

For the desired connections between the two systems, a control computer not shown in detail in FIG. 5 enters data sets into the control cell CC x for the corresponding tributary system time slot T-TS x. According to the invention, one data set per connection is used for accessing the control cells, and this data set respectively has a data field AF x and MF x, as shown in FIG. 5. The data field AF x indicates the number A-TS No. of the aggregate time slot A-TS y, which for purposes of data exchange is intended to be connected to the data cell DC x in each storage block, in accordance with the connection list shown in Table 1, which data cell DC x is defined by the entry. The data field MF x indicates the address $A_{NXT}$ of the control cell CC z and consequently also the address of the data cell DC z, which is required as the next one according to the connection list from Table 1, after the executed data exchange of the aggregate time slot A-TS y with the data memory DM. That is, for the corresponding connection, each data set, with its own address A = x under which it is entered in the control memory CM, determines the tributary system-side part of a desired connection and with the number A-TS No. in the data field AF x, determines the aggregate-side part of this desired connection, while the content of data field MF x indicates the address $A_{NXT}$ for the next connection in the connection sequence.

The control memory CM also contains a read address terminal RA, through the use of which each data set can be accessed directly. The control memory CM respectively supplies the number A-TS No. = y at a data output DO and the address $A_{NXT}$ = z at an address output AO. A buffer memory REG is disposed at the address output AO and is for temporarily storing the address $A_{NXT}$ from the current data set. A comparator COMP is disposed at the data output DO and compares the number A-TS No. = y with the counter state of the time slot counter A-TSC running synchronously to the aggregate frame A-FR.

Therefore in the cross-connect switch, the following control values are available at any time in a parallel and separate fashion for the aggregate-side control:

☐ The common address A = x, which is disposed in the buffer memory REG and is for addressing the data blocks $DM_{UP}$, $DM_{DOWN}$ and the control memory CM,

☐ the address $A_{NXT}$ = z that is disposed in the data set of the control cell CC x and is for temporary storage,

☐ the number A-TS No. = y disposed in the data set of the control cell CC x as a first comparison value for the comparator COMP, and

☐ the number of the current aggregate time slot A-TS a, which corresponds to the counter state of the time slot counter A-TSC running synchronously to the aggregate frame A-FR, as a second comparison value for the comparator COMP.

If the two latter control values are the same, data exchange occurs.

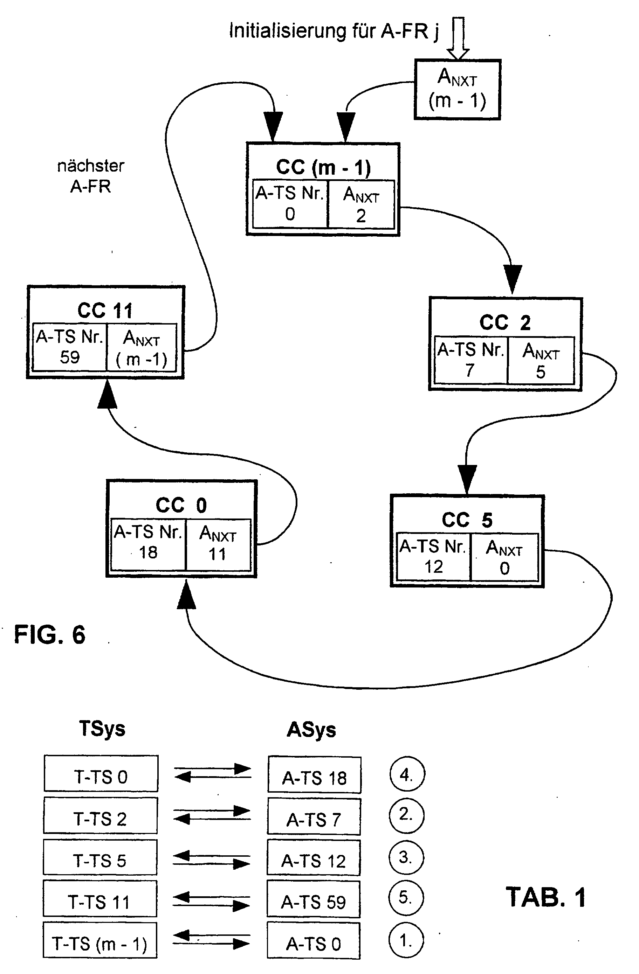

The function of the circuit according to the invention should be explained in conjunction with FIG. 6. In order to facilitate the representation, only the five connections listed in Table 1 are realized between the two systems. These are listed in the sequence of the tributary system time slots. From the aggregate side, the access to the storage blocks $DM_{UP}$, $DM_{DOWN}$ occurs in the sequence according to the circled numbers. In order to define the addresses for the first connection of the connection sequence according to Table 1 in a first aggregate frame A-FR j, e.g. upon initial operation of the switch or after the breaking of all connections, the control computer begins an initialization. As Table 1 shows, the first time slot in the aggregate frame for which a connection is entered is the time slot A-TS 0. This should be connected on the tributary system side with the time slot T-TS (m-1). Therefore, the control computer loads the initial address A = (m-1) into the buffer memory REG. The aggregate-side write and read address terminals RA, WA in the storage blocks $DM_{UP}$, $DM_{DOWN}$ are respectively addressed to the data cell DC (m-1) that is required for the tributary system-side part of the first connection. At the same time, there is access to the control cell CC (m-1), which contains the data set for the first connection. As a result, in FIG. 5, the number A-TS No. = 0 that contains this data set is standing by at the data output DO and the address $A_{NXT}$ = 2 for the data set of the subsequent connection is standing by at the address output AO. The comparator COMP compares the number A-TS No. = 0 from the data output DO to the counter state of the time slot counter A-TSC. Upon appearance of the time slot A-TS 0 in the aggregate frame A-FR j, the comparator COMP generates a control pulse. On the one hand, by way of the terminal activation ports TAP, this control pulse enables the data terminals DIT, DOT of the storage blocks for the data exchange, for the first connection adjusted. On the other hand, the address $A_{NXT}$ = 2 contained in the data set is loaded into the buffer memory REG in lieu of the initial address A = (m-1). Since the write address terminal WA of the memory block $DM_{DOWN}$ and the read address terminal RA of the memory block $DM_{UP}$ and of the control block CM are connected to the output of the buffer memory, the storage blocks $DM_{UP}$ and $DM_{DOWN}$ are addressed to the data cells DC 2 and the control memory CM is addressed to the control cell CC 2 and the same cycle is started for the next connection according to the connection sequence Table 1. Upon appearance of the time slot A-TS 7 in the aggregate frame A-FR j, the aggregate-side data exchange for the second desired connection is executed and the address $A_{NXT}$= 5 is accepted into the buffer memory REG for the third connection. This process repeats itself until all of the connections have been successively produced during a pulse frame duration T. In the data set of the last connection of the aggregate frame A-FR j, in the current example in the control cell CC 11 in the data field MF 11; the address $A_{NXT}$ = (m-1 ) is entered for the first connection of the subsequent aggregate frame A-FR (j+1 ). In this manner, without repeating the initialization, the cross-connect switch realizes all of the connections listed in Table 1 cyclically an arbitrary number of times in each successive aggregate frame A-FR (j+1), A-FR (j+2), etc., so that the scanned values of the connections are exchanged serially without further initialization of the control computer.

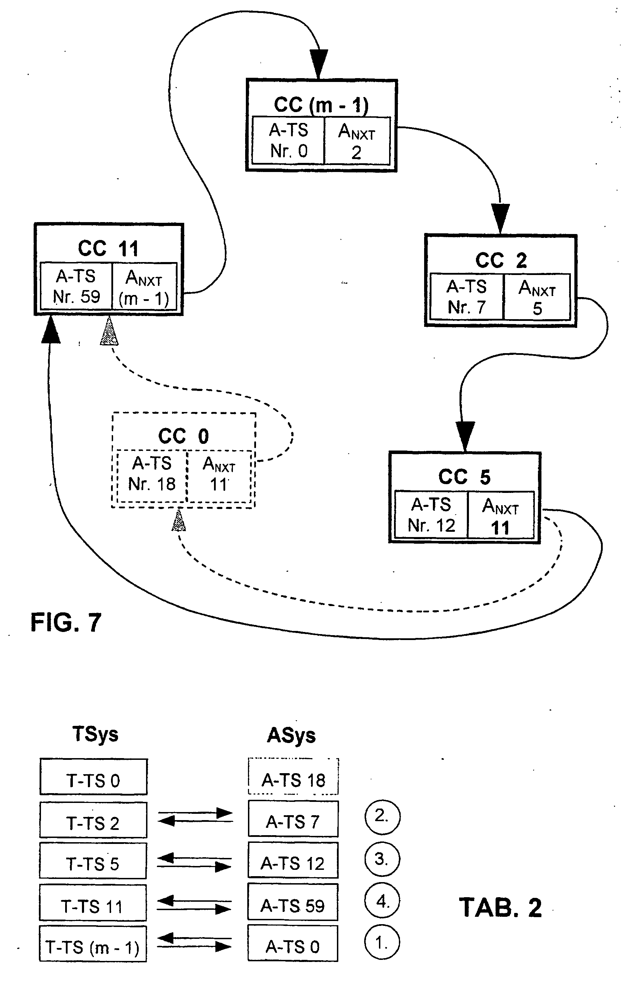

FIG. 7 shows the cancellation of an existing connection in the connection list. In the current instance, the subscriber, who was connected from the aggregate side by way of the time slot A-TS 18 to a subscriber in the time slot T-TS 0, has hung up. After this, the control computer changes the second data field in the data set of the preceding connection. In the example, this is in the third connection. In lieu of the original address $A_{NXT}$ = 0, the new address $A_{NxT}$ = 11 is entered into the control cell CC 5. From this time on, the data cells DC 0 and the control cell CC 0 are skipped in the connection sequence, without the entry being deleted. Since the comparator COMP supplies no further control pulse upon appearance of the aggregate time slot A-TS 18, the data input and data output terminals of the storage blocks remain inactive for the duration of this time slot and no data exchange occurs between the storage blocks and the tributary system. The data set is only overwritten when the tributary system time slot T-TS 0 constitutes the tributary system-side part of a new connection.

If new connections are intended be established within existing ones, then the control computer writes additional data sets for this into the control cells CC x of the corresponding tributary system time slots and, according to the new address, respectively changes the data field MF in the data set of the aggregate-side connection directly preceding it chronologically.

In the embodiment according to the invention, the data sets each include a storage capacity of ($\log_2 n$) bit for the data field AF x and of ($\log_2 m$) for the data field MF x. If, for example, as is the case underlying FIG. 8, the aggregate system has n = 2016 time slots A-TS and the tributary system has 32 time slots T-TS, then each control cell requires ($\log_2 n$) = 11 storage elements for the data field AF x for storing the number A-TS No. and requires ($\log_2 m$) = 5 storage elements for the data field MF x for storing the address $A_{NXT}$. However, since a total of only m = 32 control cells are required per cross-connect switch in the current example, the demand for storage elements is expressed with 32 · 16 bit = 512 bit. This is significantly less in relation to the first known embodiment, with n· ($\log_2 m$ + 1) = 12 096 bit.

FIG. 8 shows a comparison of the total demand for storage capacity (curve 3) in relation to the known embodiments (curves 1 and 2). The advantages of the invention are particularly apparent when m << n.

**Claims**

1.  A cross-connect switch for time division multiplexing in a digital communication network, said switch establishes connections and exchanges of data words between a tributary system (TSys) with a first number (m) of tributary system time slots (T-TS 0 to T-TS m-1) in a tributary system frame (T-FR) and an aggregate system (ASys) with a second, significantly higher number (n) of aggregate time slots (A-TS 0 to A-TS n-1), wherein both systems (TSys and ASys) operate on a same frame duration (T), and this cross-connect switch includes:

    a data memory (DM) with data cells (DC 0 to DC m-1) for buffering of data words of at least one tributary system frame (T-FR), wherein the data cells are accessed by a write address terminal (WA) and a read address terminal (RA) by means of cell addresses (A), according to a connection sequence that depends on call intent and
    wherein the tributary system (TSys) exchanges data words with the data cells (DC 0 to DC m-1) synchronously to each tributary system frame (T-FR) by definitely assigning each data cell (DC 0 to DC m-1) to a tributary system time slot (T-TS 0 to T-TS m-1) and whereas the aggregate system (ASys) exchanges data words with data cells according to call intent in the chronological sequence of the aggregate time slots (A-TS 0 to A-TS n-1)
    a control memory (CM) with control cells (CC 0 to CC m-1) for storing the cell addresses (A) of the data cells that are required during the current aggregate frame (A-FR j) for the data word exchange between the data memory (DM) and the aggregate system (ASys)
    first identification means (T-TSC) identifying the current tributary system time slot (T-Ts k) for synchronizing the word exchange between the data cells (DC 0 to DC m-1) and the tributary system frame (T-FR) and
    second identification means (A-TSC) providing the identification number of the current aggregate time slot (A-TS i) for controlling the exchange between aggregate system (ASys) and data cells (DC 0 to DC m-1)

    **characterized in that**
    each control cell (CC x) is also definitely assigned to a tributary system time slot (T-TS x) to access both the data cells (DC 0 to DC m-1) and the control cells (CC 0 to CC m-1) by means of a single cell address (A=x) per time slot,
    for each call intent for the tributary system time slot (T-TS x) with a desired aggregate time slot (A-TS y), a data set is foreseen in the assigned control cell (CC x), which contains the identification number (A-TS No. = y) of the desired aggregate time slot (A-TS y) in a first data field (AT x), and contains a cell address ($A_{NXT}$ = z) for the data set of the subsequent connection in a second data field (MF x), which connection is required as the next to realize the connection sequence,
    buffer means (REG), which store the cell address ($A_{NXT}$ = x) of the current addressed data set temporarily, are connected to a comparator (COMP) for comparing the content (A-TS No.) of the data field (AF x) of the control cell (CC x) with the identification number of the current aggregate time slot (A-Ts i) to realize data exchange with the current addressed data cell when the desired aggregate time slot (A-TS y) occurs.

2.  The cross-connect switch according to claim 1, **characterized in that** each data set, with its address (A = x) under which it is entered in the control memory (CM), indicates the tributary system time slot (T-TS x) for the corresponding connection and, with the content (A-TS No.) of the first data field (AF x), indicates the aggregate time slot (A-TS y), while the content of the second data field (MF x) indicates the address ($A_{NXT}$ = z) for the data cell (DC z) and the control cell (CC z) of the next connection in the connection sequence.

3.  The cross-connect switch according to claim 1, **characterized in that** the data memory (DM) includes a first storage block ($DM_{UP}$) for the data stream flowing to the aggregate system and a second storage block ($DM_{DOWN}$) for the data stream coming from the aggregate system (ASys), each with a data input terminal (DIT) that can be addressed by way of the write address terminal (WA) and a data output terminal (DOT) that is independent of it and can be addressed by way of the read address terminal (RA), wherein at least on the aggregate side, the data input terminal (DIT) and the data output terminal (DOT) can be enabled for the data flow by way of terminal activation ports (TAP).

4.  The cross-connect switch according to claim 3, **characterized in that** the control memory (CM) has a read address terminal (RA) for directly accessing each data set, by means of which the number (A-TS No. = y) of the aggregate time slot (A-TS y) contained in the data set is supplied at a data output (DO), and the address ($A_{NXT}$ = z) for the data set of the subsequent connection is supplied at an address output (AO).

5.  The cross-connect switch according to claim 4, **characterized in that**
    a first time slot counter (T-TSC) performs the first identification means and addresses data memory (DM) directly,

a second time slot counter (A-TSC) performs the second identification means time slot counter (A-TSC), which runs synchronously to the aggregate frame (A-FR) and

the comparator (COMP) generates a control pulse (CI) when the data field (AF x) of the control cell (CC x) with the identification number of the current aggregate time slots (A-Ts i) coincide, which temporarily enables the inhibited data input terminal (DIT) and the inhibited data output terminal (DOT).

6. The cross-connect switch according to claim 5, **characterized in that** the buffer means (REG) store the cell address (A = z) supplied at the address output (AO) of the control memory (CM) upon appearance of the control pulse (CI) from the comparator (COMP).

7. The cross-connect switch according to claim 4, **characterized in that** both the read address terminal (RA) of the control memory (CM) and of the first storage block (DM$_{UP}$) and the write address terminal (WA) of the second storage block (DM$_{DOWN}$) are connected to the data output of the buffer means (REG).

8. The cross-connect switch according to claim 1, **characterized in that** a control computer for initializing a first connection of the connection sequence writes an initial address (A), which defines the address of the control cell (CC x) with the data of the first connection and of the data cells (DC x), into the buffer means (REG).

9. The cross-connect switch according to claim 8, **characterized in that** upon termination of a connection contained in the connection list, the control computer changes the content (A$_{NXT}$) of the second data field (MF x) in the data set of the preceding connection.

10. The cross-connect switch according to claim 8, **characterized in that** in order to establish a new connection in the connection list, the control computer enters an additional data set into the control cell (CC x) corresponding to the tributary system time slot (T-TS x) and changes the second data field in the data set of the preceding connection.

**Patentansprüche**

1. Cross-Connect-Schalter für den Zeitmultiplexbetrieb in einem digitalen Nachrichtennetz, wobei der Schalter Verbindungen herstellt und Datenwörter austauscht zwischen einem Untersystem (TSys) mit einer ersten Anzahl (m) von Untersystemzeitfenstern (T-TS 0 bis T-TS m-1) in einem Untersystemrahmen (T-FR) und einem Sammelsystem (ASys) mit einer zweiten, wesentlich größeren Anzahl (n) von Sammelzeitfenstern (A-TS 0 bis A-TS n-1), wobei beide Systeme (TSys und ASys) mit einer gleichen Rahmendauer (T)operieren und dieser Cross-Connect-Schalter enthält:

einen Datenspeicher (DM) mit Datenzellen (DC 0 bis DC m-1) zum Zwischenspeichern von Datenwörtern von mindestens einem Untersystemrahmen (T-FR), wobei auf die Datenzellen von einem Schreibadressterminal (WA) und einem Leseadressterminal(RA) mit Hilfe von Zelladressen (A) entsprechend einer vom Verbindungswunsch abhängigen verbindungsabfolge zugegriffen wird und

wobei das Untersystem (TSys) Datenwörter mit den Datenzellen (DC 0 bis DC m-1) synchron zu jedem Untersystemrahmen (T-FR) austauscht, indem jede Datenzelle (DC 0 bis DC m-1) definitiv einem Untersystemzeitfenster (T-TS 0 bis T-TS m-1) zugewiesen wird und wobei das Sammelsystem (ASys) Datenwörter mit den Datenzellen entsprechend dem Verbindungswunsch in der chronologischen Abfolge der Sammelzeitfenster (A-TS 0 bis A-TS n-1) austauscht, einen Steuerspeicher (CM) mit Steuerzellen (CC 0 bis CC m-1) zum Speichern der Zelladressen (A) der Datenzellen, die während des laufenden Sammelrahmens (A-FR j) für den Datenwortaustausch zwischen dem Datenspeicher (DM) und dem Sammelsystem (ASys) benötigt werden,

erste Identifizierungsmittel (T-TSC) zum Identifizieren des laufenden Untersystemzeitfensters (T-Ts k) für das Synchronisieren des Wortaustauschs zwischen den Datenzellen (DC 0 bis DC m-1) und dem Untersystemrahmen (T-FR) und

zweite Identifizierungsmittel (A-TSC), welche die Identifizierungsnummer des laufenden Sammelzeitfensters (A-TS i)zur Steuerung des Austausches zwischen dem Sammelsystem (ASys) und den Datenzellen (DC 0 bis DC m-1) bereitstellen,

**dadurch gekennzeichnet, dass**

jede Steuerzelle (CC x) definitiv auch einem Untersystemzeitfenster (T-TS x) zugewiesen ist, um sowohl auf die Datenzellen (DC-0 bis DC m-1) und die Steuerzellen (CC 0 bis CC m-1) mit Hilfe einer einzigen Zelladresse (A=x) pro Zeitfenster zuzugreifen,

für jeden Verbindungswunsch für das Untersystemzeitfenster (T-TS x) mit einem gewünschten Sammelzeitfenster (A-TS y) in der zugewiesenen Steuerzelle (CC x) ein Datensatz vorgesehen ist, der in einem ersten Datenfeld (AF x) die Identifizierungsnummer (A-TS Nr. = y) des gewünschten Sammelzeitfensters (A-TS y) enthält und der in einem zweiten Datenfeld (MF x) eine Zelladresse ($A_{NXT}$ = z) für den Datensatz der folgenden Verbindung enthält, welche als nächste erforderlich wird, um die Verbindungsabfolge zu realisieren,

Zwischenspeichermittel (REG), welche die Zelladresse ($A_{NXT}$ = x) des momentan adressierten Datensatzes zeitweilig speichern, mit einem Komparator (COMP) verbunden werden, um den Inhalt (A-TS Nr.) des Datenfelds (AF x) der Steuerzelle (CC x) mit der Identifizierungsnummer des laufenden Sammelzeitfensters (A-TS i) zu vergleichen, um den Datenaustausch mit der momentan adressierten Datenzelle auszuführen, wenn des gewünschte Sammelzeitfenster (A-TS y) vorliegt.

2. Cross-Connect-Schalter nach Anspruch 1, **dadurch gekennzeichnet, dass** jeder Datensatz mit seiner Adresse (A=x), unter der er in den Steuerspeicher (CM) eingegeben ist, das Untersystemzeitfenster (T-TS x) für die zugehörige Verbindung angibt und mit dem Inhalt (A-TS Nr.) des ersten Datenfeldes (AF x) das Sammelzeitfenster (A-TS y) anzeigt, während der Inhalt des zweiten Datenfelds (MF x) die Adresse ($A_{NXT}$ = z) für die Datenzelle (DC z) und die Steuerzelle (CC z) der nächsten Verbindung in der Verbindungsabfolge anzeigt.

3. Cross-Connect-Schalter nach Anspruch 1, **dadurch gekennzeichnet, dass** der Datenspeicher (DM) einen ersten Speicherblock ($DM_{UP}$) für den zum Sammelsystem fließenden Datenstrom und einen zweiten Speicherblock ($DM_{DOWN}$) für den vom Sammelsystem (ASys) kommenden Datenstrom enthält, die beide ein Dateneingabeterminal (DIT), das über das Schreibadressterminal (WA) adressiert werden kann, und ein Datenausgabeterminal (DOT), das von ihm unabhängig ist und über das Leseadressterminal (RA) adressiert werden kann, aufweisen, wobei das Dateneingabeterminal (DIT) und das Datenausgabeterminal (DOT) zumindest auf der Seite des Sammelsystems über Terminalaktivierungsanschlüsse (TAP) für den Datenfluss aktiviert werden können.

4. Cross-Connect-Schalter nach Anspruch 3, **dadurch gekennzeichnet, dass** der Steuerspeicher (CM) ein Schreibadressterminal (RA) zum direkten Zugriff auf jeden Datensatz aufweist, mit dessen Hilfe die Nummer (AT-S Nr. =y) des Sammelzeitfensters (A-TS y), die in dem Datensatz enthalten ist, an einer Datenausgabe (DO) bereitgestellt wird und die Adresse ($A_{NXT}$=z) für den Datensatz der folgenden Verbindung an einer Adressenausgabe (AO) bereitgestellt wird.

5. Cross-Connect-Schalter nach Anspruch 4, **dadurch gekennzeichnet, dass**
ein erster Zeitfensterzähler (T-TSC) die ersten Identifizierungsmittel bildet und den Datenspeicher (DM) direkt adressiert,
ein zweiter Zeitfensterzähler (A-TSC) den Zeitfensterzähler der zweiten Identifizierungsmittel (A-TSC) bildet, der synchron zum Sammelrahmen (A-FR) läuft, und
der Komparator (COMP) einen Steuerpuls (CI) erzeugt, wenn das Datenfeld (AF x) der Steuerzelle (CC x) mit der Identifizierungsnummer des laufenden Aggregatzeitfensters (A-TS i) übereinstimmt, welcher zeitweise das gesperrte Dateneingabeterminal (DIT) und das gesperrte Datenausgabeterminal (DOT) aktiviert.

6. Cross-Connect-Schalter nach Anspruch 5, **dadurch gekennzeichnet, dass** die Zwischenspeichermittel (REG) die Zelladresse (A=z), die an der Adressenausgabe (AO) des Steuerspeichers (CM) bereitgestellt wird, nach Eintreffen des Steuerpulses (CI) vom Komparator (COMP) speichern.

7. Cross-Connect-Schalter nach Anspruch 4, **dadurch gekennzeichnet, dass** sowohl das Leseadressterminal (RA) des Steuerspeichers (CM) und des ersten Speicherblocks ($DM_{UP}$) als auch das Schreibadressterminal (WA) des zweiten Speicherblocks ($DM_{DOWN}$) mit der Datenausgabe der Zwischenspeichermittel (REG) verbunden sind.

8. Cross-Connect-Schalter nach Anspruch 1, **dadurch gekennzeichnet, dass** ein Steuerrechner zur Initialisierung einer ersten Verbindung der Verbindungsabfolge eine Anfangsadresse (A), welche die Adresse der Steuerzelle (CC x) mit den Daten der ersten Verbindung und der Datenzellen (DC x) festlegt, in die Zwischenspeicherhilfsmittel (REG) einschreibt.

9. Cross-Connect-Schalter nach Anspruch 8, **dadurch gekennzeichnet, dass** der Rechner nach dem Beenden einer Verbindung, die in der Verbindungsliste enthalten ist, den Inhalt ($A_{NXT}$) des zweiten Datenfeldes (MF x) in den Datensatz der vorhergehenden Verbindung einwechselt.

10. Cross-Connect-Schalter nach Anspruch 8, **dadurch gekennzeichnet, dass** der Steuerrechner zum Herstellen einer neuen Verbindung in der Verbindungsliste einen zusätzlichen Datensatz in die Steuerzelle (CC x) eingibt, die zum Untersystemzeitfenster (T-TS x) gehört, und das zweite Datenfeld im Datensatz der vorhergehenden Verbindung auswechselt.

## Revendications

1. Commutateur d'interconnexion pour le multiplexage temporel dans un réseau numérique de communication, ledit commutateur établit des connexions et échange des mots de donnée entre un système affluent (TSys) avec un premier nombre (m) d'intervalles de temps de système affluent (T-TS 0 à T-TS m-1) dans une trame de système affluent (T-FR) et un système affilié (ASys) avec un second nombre sensiblement plus élevé (n) d'intervalles de temps affiliés (A-TS 0 à A-TS n-1), les deux systèmes (TSys et ASys) fonctionnant sur la même durée de trame (T) et ce commutateur d'interconnexion comprenant :

   une mémoire de données (DM) avec des cellules de données (DC 0 à DC m-1) pour la mise en mémoire tampon de mots de données d'au moins une trame de système affluent (T-FR), les cellules de données étant accessibles par un terminal d'écriture d'adresse (WA) et un terminal de lecture d'adresse (RA) au moyen d'adresses de cellules (A) selon une séquence de connexions qui dépend de l'intention d'appel et

   où le système affluent (TSys) échange des mots de données avec les cellules de données (DC 0 à DC m-1) de manière synchrone à chaque trame de système affluent (T-FR) en assignant définitivement chaque cellule de données (DC 0 à DC m-1) à un intervalle de temps de système affluent (T-TS 0 à T-TS m-1) et où le système affilié (ASys) échange des mots de données avec des cellules de données selon l'intention d'appel dans la séquence chronologique des intervalles de temps affiliés (A-TS 0 à A-TS n-1),

   une mémoire de commande (CM) avec des cellules de commande (CC 0 à CC m-1) pour le stockage d'adresses de cellule (A) des cellules de données qui sont requises pendant la trame affiliée courante (A-FR j) pour l'échange de mots de données entre la mémoire de données (DM) et le système affilié (ASys),

   un premier moyen d'identification (T-TSC) identifiant l'intervalle de temps de système affilié courant (T-Ts k) pour la synchronisation de l'échange de mots entre les cellules de données (DC 0 à DC m-1) et la trame de système affilié (T-FR) et

   un second moyen d'identification (A-TSC) fournissant le nombre d'identification de l'intervalle de temps affilié courant (A-TS i) pour la commande de l'échange entre le système affilié (ASys) et les cellules de données (DC 0 à DC m-1),

   **caractérisé en ce que**
   chaque cellule de commande (CC x) est donc définitivement assignée à un intervalle de temps de système affilié (T-TS x) pour accéder à la fois aux cellules de données (DC 0 à DC m-1) et aux cellules de commande (CC 0 à CC m-1) au moyen d'une adresse unique de cellule (A=x) par intervalle de temps,
   pour chaque intention d'appel pour l'intervalle de temps de système affilié (T-TS x) avec un intervalle de temps affilié souhaité (A-TS y), un jeu de données est prévu dans la cellule de commande assignée (CC x), qui contient le numéro d'identification (A-TS N° = y) de l'intervalle de temps affilié souhaité (A-TS y) dans un premier champ de données (AF x) et contient une adresse de cellule ($A_{NXT}$ = z) pour le jeu de données de la connexion suivant dans un second champ de données (MF x), connexion qui est requise comme étant la prochaine pour réaliser la séquence de connexion,
   des moyens de mémoire tampon (REG), qui stockent l'adresse de cellule ($A_{NXT}$= x) du jeu de données adressé courant, sont connectés à un comparateur (COMP) qui compare le contenu (A-TS N°) du champ de données (AF x) de la cellule de contrôle (CC x) avec le numéro d'identification de l'intervalle de temps courant affilié (A-Ts i) pour réaliser l'échange de données avec la cellule de données courante adressée quand l'intervalle de temps affilié souhaité (A-TS y) se produit.

**2.** Commutateur d'interconnexion selon la revendication 1, **caractérisé en ce que** chaque jeu de données, avec son adresse (A = x) sous laquelle il est entrée dans la mémoire de commande (CM), indique l'intervalle de temps de système affilié (T-TS x) pour la connexion correspondante et, avec le contenu (A-TS N°) du premier champ de données (AF x), indique l'intervalle de temps affilié (A-TS y) pendant le quel le contenu du second champ de données (MF x) indique l'adresse ($A_{NXT}$ = z) pour la cellule de données (DC z) et la cellule de commande (CC z) de la connexion suivante dans la séquence de connexion.

**3.** Commutateur d'interconnexion selon la revendication 1, **caractérisé en ce que** la mémoire de données (DM) comprend un premier bloc de stockage ($DM_{UP}$) pour le flux de données entrant dans le système affilié et un second bloc de stockage ($DM_{DOWN}$)) pour le flux de données venant du système affilié (ASys), chacun avec un terminal d'entrée de données (DIT) qui peut être adressé au moyen d'un terminal d'écriture d'adresse (WA) et un terminal de sortie de données (DOT) qui est indépendant et qui peut être adressé par le terminal de lecture d'adresse (RA), où au moins sur le côté affilié, le terminal d'entrée de données (DIT) et le terminal de sortie de données (DOT) peuvent être activés pour le flux de données au moyen de ports d'activation de terminal (TAP).

**4.** Commutateur d'interconnexion selon la revendication 3 , **caractérisé en ce que** la mémoire de commande (CM) présente un terminal de lecture d'adresse (RA) pour un accès direct à chaque jeu de données, au moyen duquel le nombre (A-TS N° = y) de l'intervalle de temps affilié (A-TS y) contenu dans le jeu de données est fourni à une sortie de données (DO) et l'adresse ($A_{NXT}$ = z) pour le jeu de donné de la connexion suivante est fourni à un sortie d'adresse (AO) .

**5.** Commutateur d'interconnexion selon la revendication 4, **caractérisé en ce qu'**un premier compteur d'intervalle de temps (T-TSC) effectue le premier moyen d'identification et adresse la mémoire de données (DM) directement, qu'un second compteur d'intervalle de temps (A-TSC) exécute le second compteur d'intervalle de temps de moyen d'identification (ATSC), qui fonctionne en synchrone avec la trame affiliée (A-FR) et
**en ce que** le comparateur (COMP) génère une impulsions de commande (CI) quand le champs de données (AF x) de la cellule de commande (CC x) coïncide avec un numéro d'identification des intervalles de temps affilié courant (A-Ts i) qui active temporairement le terminal désactivé d'entrée de données (DIT) et le commutateur d'interconnexion selon la revendication 1, **caractérisé en ce que** désactivé (DOT).

**6.** Commutateur d'interconnexion selon la revendication 5, **caractérisé en ce que** les moyens de mémoire tampon (REG) stockent l'adresse de cellule (A = z) fournie à la sortie d'adresse (AO) de la mémoire de commande (CM) sur l'apparence de l'impulsion de commande (CI) depuis le comparateur (COMP).

**7.** Commutateur d'interconnexion selon la revendication 4, **caractérisé en ce que** le terminal de lecture de données (RA) de la mémoire de commande (CM) et du premier bloc de stockage ($DM_{UP}$) et le terminal d'écriture d'adresse (WA) du second bloc de stockage ($DM_{DOWN}$)) sont connectés à la sortie de données des moyens de mémoires tampon (REG).

**8.** Commutateur d'interconnexion selon la revendication 1, **caractérisé en ce qu'**un ordinateur de commande pour l'initialisation d'une première connexion de la séquence de connexion écrit une adresse initiale (A) qui définit l'adresse de la cellule de commande (CC x) avec la donnée de la première connexion et des cellules de connexion (DC x), dans les moyens de mémoire tampon (REG).

**9.** Commutateur d'interconnexion selon la revendication 8, **caractérisé en ce qu'**à l'achèvement d'une connexion figurant dans la liste de connexions, l'ordinateur de commande modifie le contenu ($A_{NXT}$) du second champ de données (MF x) dans le set de données de la connexion précédente.

**10.** Commutateur d'interconnexion selon la revendication 8, **caractérisé en ce qu'**afin d'établir une nouvelle connexion dans la liste de connexion, l'ordinateur de commande entre un jeu de données supplémentaire dans la cellule de commande (CC x) correspondant à l'intervalle de temps de système affilié (T-TS x) et change le second champs de données dans le jeu de données de la connexion précédente.

Tributary Systems          Aggregat System

TSys 1                                                      ASys
                    T-BUS 1
T-FR 1  □    ▨    □ ⇔ ⟨X⟩ ⇔
      T-TS 0₁   T-TS x₁  T-TS (m-1)₁                              T
                          TDM XC        □ ▨    ▨ ▤    □ A-FR
TSys 2                                  A-TS 0        A-TS (n-1)
        T- TS x₂  T-BUS 2              A-TS y      A-TS z
T-FR 2  □      ▨   □ ⇔ ⟨X⟩ ⇔
      T-TS 0₂    T-TS (m-1)₂

TSys k       T
                  T-TS x_k   T-BUS k
T-FR k  □    ▦          □ ⇔ ⟨X⟩ ⇔     A-BUS
      T-TS 0_k      T-TS (m-1)_k

                                    Upstream ⟶
                              DATA:
                                    Downstream ⟵

**FIG. 1**

          T-TS (m-1)                    A-TS n-1
T-FR i    T-TS 0                        A-TS 0    A-FR j
                          DM            A-TS 1
          T-TS 1                        A-TS 2
                          DC 0          A-TS 3
          T-TS 2          DC 1          A-TS 4
                          DC 2          A-TS 5
          T-TS 3          DC 3          A-TS 6      T
                                        A-TS 7
                                        A-TS 8
                                        A-TS 9
                          DC (m -1)     A-TS 10
          T-TS                          A-TS 11
          (m -1)                        A-TS 12
                                        A-TS 13

                                        A-TS n-1
T-FR (i+1)                 **FIG. 2**   A-TS 0    A-FR (j + 1)

13

**FIG. 3**

EP 1 016 313 B1

**FIG. 4**

EP 1 016 313 B1

**FIG. 5**

Initialisierung für A-FR j ⬇

$A_{NXT}$ (m - 1)

nächster A-FR

**CC (m - 1)**

| A-TS Nr. | $A_{NXT}$ |
|---|---|
| 0 | 2 |

**CC 11**

| A-TS Nr. | $A_{NXT}$ |
|---|---|
| 59 | ( m -1) |

**CC 2**

| A-TS Nr. | $A_{NXT}$ |
|---|---|
| 7 | 5 |

**CC 0**

| A-TS Nr. | $A_{NXT}$ |
|---|---|
| 18 | 11 |

**CC 5**

| A-TS Nr. | $A_{NXT}$ |
|---|---|
| 12 | 0 |

**FIG. 6**

| TSys | | ASys | |
|---|---|---|---|
| T-TS 0 | ⇄ | A-TS 18 | 4. |
| T-TS 2 | ⇄ | A-TS 7 | 2. |
| T-TS 5 | ⇄ | A-TS 12 | 3. |
| T-TS 11 | ⇄ | A-TS 59 | 5. |
| T-TS (m - 1) | ⇄ | A-TS 0 | 1. |

**TAB. 1**

**CC (m - 1)**

| A-TS Nr. 0 | A$_{NXT}$ 2 |
|---|---|

**CC 11**

| A-TS Nr. 59 | A$_{NXT}$ (m - 1) |
|---|---|

**CC 2**

| A-TS Nr. 7 | A$_{NXT}$ 5 |
|---|---|

**CC 0**

| A-TS Nr. 18 | A$_{NXT}$ 11 |
|---|---|

**CC 5**

| A-TS Nr. 12 | A$_{NXT}$ **11** |
|---|---|

**FIG. 7**

**TSys**          **ASys**

| T-TS 0 | | A-TS 18 | |
|---|---|---|---|
| T-TS 2 | ⬌ | A-TS 7 | ②. |
| T-TS 5 | ⬌ | A-TS 12 | ③. |
| T-TS 11 | ⬌ | A-TS 59 | ④. |
| T-TS (m - 1) | ⬌ | A-TS 0 | ①. |

**TAB. 2**

**FIG. 8**